# EUROPÄISCHE PATENTANMELDUNG

(11) **EP 4 406 400 A1**
(43) Veröffentlichungstag der Anmeldung: **31.07.2024**
(21) Anmeldenummer: 23212681.3
(22) Anmeldetag: 28.11.2023
(51) Int. Cl.: A01D 43/08

(54) **SELBSTFAHRENDE ERNTEMASCHINE**

(30) Priorität: 26.01.2023 DE 102023101881
(71) Anmelder: CLAAS Selbstfahrende Erntemaschinen GmbH, 33428 Harsewinkel (DE)
(72) Erfinder: Renneke, Elmar, 33129 Delbrück (DE); Thies, Sören, 33442 Herzebrock-Clarholz (DE)
(74) Vertreter: CLAAS Gruppe

(57) **Zusammenfassung**

Die vorliegende Anmeldung betrifft eine selbstfahrende Erntemaschine (1), insbesondere in Form eines Feldhäckslers, umfassend einen Antriebsmotor (2), ein Kühlsystem (5) zur Kühlung des Antriebsmotors (2), das Kühlsystem (5) umfassend ein Gehäuse (9), einen Kühlkörper (6), ein Kühlventilator (7), eine dem Kühlkörper (6) vorgeordnete, an dem Gehäuse (9) gelagerte Siebeinrichtung (8), wobei die Siebeinrichtung (8) einen rotationssymmetrischen Rahmen (3) sowie ein an dem Rahmen (3) gespanntes, flächiges Siebelement (4) aufweist, wobei die Siebeinrichtung (8) eine Mehrzahl von um eine Drehachse (11) drehbare Rollen (10) umfasst, mittels derer der Rahmen (3) um eine Symmetrieachse (12) des Rahmens (3) drehbar an dem Gehäuse (9) gelagert ist.

Um eine Erntemaschine bereitzustellen, deren Siebeinrichtung einfacher und robuster konstruiert ist als im Stand der Technik, wird erfindungsgemäß vorgeschlagen, dass die Rollen (10) eine zylindrische Lauffläche (13) sowie eine bezogen auf die Drehachse (11) der jeweiligen Rolle (10) rotationssymmetrische Nocke (14) aufweist, die radial bezogen auf die Drehachse (11) der jeweiligen Rolle (10) über die zylindrische Lauffläche (13) nach außen vorsteht, wobei der Rahmen (3) eine zu den Nocken (14) komplementäre Führungsnut (15) aufweist.

## Beschreibung

Die vorliegende Anmeldung betrifft eine selbstfahrende Erntemaschine gemäß dem Oberbegriff von Anspruch 1.

Die Erntemaschine, die insbesondere in Form eines Feldhäckslers ausgebildet sein kann, umfasst einen Antriebsmotor, der typischerweise von einer Verbrennungskraftmaschine gebildet ist. Der Antriebsmotor dient unter anderem dazu, mindestens ein Arbeitsorgan der Erntemaschine zu betreiben sowie für einen Vortrieb der Erntemaschine auf einem Untergrund zu sorgen. Hierzu umfasst die Erntemaschine ferner eine Mehrzahl von Rädern, die jeweils in einem zugehörigen Radkasten angeordnet sind. In aller Regel sind mindestens zwei der Räder drehantreibbar, wobei ein an den Rädern wirkendes Drehmoment zumindest mittelbar mittels des Antriebsmotors bereitgestellt wird.

Der Antriebsmotor entwickelt während eines Betriebs der Erntemaschine Abwärme, die abgeführt werden muss. Daher umfasst die Erntemaschine ferner ein Kühlsystem zur Kühlung des Antriebsmotors. Das Kühlsystem umfasst wiederum einen Kühlkörper, der beispielsweise eine Vielzahl von Kühllamellen aufweisen kann, und einen Kühlventilator zur Erzeugung eines Kühlluftstroms. Der Kühlventilator ist derart relativ zu dem Kühlkörper angeordnet, dass der mittels des Kühlventilators erzeugte Kühlluftstrom entlang des Kühlkörpers strömt und/oder den Kühlkörper durchströmt. Insbesondere kann der Kühlventilator an einem Gehäuse des Kühlsystems angeordnet sein, innerhalb dessen der Kühlkörper gelagert ist.

Das Kühlsystem umfasst ferner eine Siebeinrichtung, die dem Kühlkörper vorgeordnet ist. Die Siebeinrichtung ist dazu vorgesehen und eingerichtet, in dem Kühlluftstrom mitgeführte Schmutzpartikel zurückzuhalten und auf diese Weise an einer Weiterleitung zu dem Antriebsmotor zu hindern. Eine solche Siebeinrichtung hat ferner den Vorteil, dass die Schmutzpartikel von dem Kühlkörper ferngehalten werden. Hierzu umfasst die Siebeinrichtung einen Rahmen, auf oder an den ein flächiges Siebelement gespannt ist, das eine Siebfläche bereitstellt. Beispielsweise kann das Siebelement mit dem Rahmen verklebt sein. Der Rahmen kann beispielsweise von Aluminium gebildet sein. Das Siebelement kann beispielsweise von in Form eines engmaschigen Siebgitters ausgebildet sein. Im Zuge des Betriebs des Kühlsystems lagern sich an dem Siebelement, das während eines Betriebs des Kühlventilators von dem Kühlluftstrom durchströmt wird, sukzessive Schmutzpartikel ab.

Die Siebeinrichtung umfasst ferner eine Mehrzahl von Rollen, die jeweils um eine Drehachse drehbar sind. Die Rollen wirken jeweils mit dem Rahmen zusammen, sodass der Rahmen mittels der Rollen derart an dem Gehäuse gelagert ist, dass er relativ zu dem Gehäuse um eine Symmetrieachse des Rahmens drehbar ist. Hierbei kann der Rahmen insbesondere die Form eines Kreisrings aufweisen, wobei die Symmetrieachse des Rahmens einen Mittelpunkt enthält, um den herum sich der Kreisring in einem Radius erstreckt. Die Rollen können beispielsweise von glasfaserverstärktem Kunststoff gebildet sein.

Die Drehbarkeit des Rahmens - und mit ihm des Siebelements - um die Symmetrieachse dient dazu, die Siebeinrichtung fortwährend abreinigen zu können. Hierzu kann das Kühlsystem beispielsweise eine Reinigungsvorrichtung umfassen, die ein Gebläse zur Erzeugung eines Reinigungsluftstroms sowie einen mit dem Gebläse strömungstechnisch verbundenen Reinigungskopf umfasst. Der Reinigungskopf ist der Siebfläche der Siebeinrichtung zugeordnet und derart nah an der Siebfläche angeordnet, dass mittels des Reinigungsluftstroms Schmutzpartikel von der Siebfläche ablösbar sind bzw. abgelöst werden. Diese Schmutzpartikel werden mittels des Reinigungsluftstroms sodann in den Reinigungskopf eingeleitet und auf diese Weise von der Siebfläche abgeführt. Hierzu kann der Reinigungskopf beispielsweise mit einer Reinigungsleitung zusammenwirken, in die die Schmutzpartikel ausgehend von dem Reinigungskopf eintreten und mittels der die Schmutzpartikel in Richtung des Gebläses abtransportiert werden.

Damit die Reinigungsvorrichtung sukzessive sowie zyklisch mit allen Stellen der Siebfläche zusammenwirken kann, um die Siebfläche im Ergebnis vollständig abreinigen zu können, werden der Rahmen und mit ihm das Siebelement in der vorstehend beschriebenen Weise fortwährend um die Symmetrieachse des Rahmens gedreht, während der nah an der Siebfläche angeordnete Reinigungskopf stationär an einer Stelle verbleibt. Auf diese Weise ist es besonders einfach möglich, zumindest im Wesentlichen jede Stelle der Siebfläche zyklisch an dem Reinigungskopf entlangzuführen, sodass der an dem Reinigungskopf wirkende Reinigungsluftstrom jeweilige Schmutzpartikel erfassen und abtransportieren kann. Auf diese Weise ist es besonders einfach möglich, die Siebfläche insgesamt zu reinigen, ohne dass der Reinigungskopf als solcher entlang der Siebfläche bewegt werden muss.

Eine Erntemaschine der vorstehend beschriebenen Art ist im Stand der Technik bereits bekannt. Hierzu wird auf das europäische Patent EP 3 064 736 B1 hingewiesen. Dieses beschreibt einen Rahmen für das Siebelement. Der Rahmen umfasst zur Lagerung einen konvexen Abschnitt, wobei der konvexe Abschnitt in konkav ausgeführten Rollen geführt wird. Die konkav ausgeführten Rollen sind zwar besonders vorteilhaft, um ein Herausrutschen des Rahmens in axiale Richtung der Symmetrieachse des Rahmens zu vermeiden, sie sind jedoch für die Aufnahme von in radialer Richtung der Rollen wirkende Kräfte sehr verschleißanfällig. Weiterhin umfasst Rahmen eine außenseitig angeordnete Dichtung, wobei in der Dichtung ein Antriebsriemen zum Antreiben des Rahmens geführt ist. Die Dichtung ist aus Kunststoff ausgebildet, das besonders verschleißanfällig ist. Zusätzlich sind die Kosten bei einem Austausch der Dichtung erhöht, da diese deutlich komplexer ausgebildet ist, um zusätzlich als Riemenführung für den Antriebsriemen zu wirken.

Der vorliegenden Anmeldung liegt die Aufgabe zugrunde, eine Erntemaschine bereitzustellen, deren Siebeinrichtung einfacher und robuster konstruiert ist als im Stand der Technik.

Die zugrunde liegende Aufgabe wird erfindungsgemäß mittels einer Erntemaschine mit den Merkmalen des Anspruchs 1 gelöst. Vorteilhafte Ausgestaltungen ergeben sich aus den zugehörigen Unteransprüchen.

Die erfindungsgemäße Erntemaschine ist dadurch gekennzeichnet, dass die Rollen, mittels derer der Rahmen an dem Gehäuse gelagert und relativ zu dem Gehäuse um die Symmetrieachse drehbar ist, jeweils eine zylindrische Lauffläche sowie eine bezogen auf die Drehachse der jeweiligen Rolle rotationssymmetrische Nocke aufweist. Diese Nocke steht radial bezogen auf die Drehachse der Rolle über die zylindrische Lauffläche hinaus nach außen vor. Der Rahmen weist indes eine zu den Nocken der Rollen komplementäre Führungsnut auf, sodass der Rahmen unter Ausbildung eines mittels Nocken und Führungsnut gebildeten Formschlusses an den Rollen gelagert ist.

Die erfindungsgemäße Erntemaschine hat viele Vorteile. Insbesondere sind die Rollen besonders gut dazu geeignet, die an dem Rahmen anfallenden Kräfte in das Gehäuse abzuleiten und gleichzeitig den Rahmen in seiner Drehbewegung um die Symmetrieachse zu führen. Dem liegt die Überlegung zugrunde, dass die Kräfte, die von dem Rahmen auf die Rollen abgeleitet werden, hauptsächlich in radiale Richtung bezogen auf die Symmetrieachse wirken. Mithin ist für die Führung des Rahmens insbesondere der zylindrische Abschnitt, d.h. die zylindrische Lauffläche der jeweiligen Rolle, bedeutsam, um Kräfte von dem Rahmen zu übernehmen. Im Unterschied zum Stand der Technik ist die zylindrische Lauffläche einer jeweiligen Rolle im Vergleich zu einer konkaven Ausgestaltung der Lauffläche einer Rolle deutlich robuster, sodass die Rolle eine höhere Standzeit aufweist und weniger wartungsanfällig ist. Damit die Rolle gleichwohl axiale Kräfte, d.h. parallel zu der Symmetrieachse des Rahmens gerichtete Kräfte, aufnehmen kann, verfügen die Rollen jeweils über die beschriebene Nocke, die formschlüssig mit der komplementären Führungsnut des Rahmens eingreift. Mittels dieses Formschlusses ist der Rahmen auch in axiale Richtung der Symmetrieachse an den Rollen gelagert und kann somit nicht "nach vorn" oder "nach hinten" von den Rollen abrutschen.

Wie vorstehend bereits dargelegt, ist eine solche Ausgestaltung besonders vorteilhaft, bei der sämtliche Rollen mit einer zylindrischen Lauffläche und einer vorstehenden Nocke ausgebildet sind. Bei dieser Ausgestaltung sind Lagerkräfte des Rahmens gleichmäßig über die Rollen verteilt, sodass jede Rolle für sich betrachtet vergleichsweise gering belastet ist. Hierdurch wird ebenfalls ein Verschleiß einer jeden einzelnen Rolle minimiert.

Weiterhin kann eine solche Ausgestaltung besonders vorteilhaft sein, bei der die Rollen, mittels derer der Rahmen an dem Gehäuse gelagert ist, bezogen auf die Symmetrieachse des Rahmens zumindest im Wesentlichen äquidistant um die Symmetrieachse herum verteilt angeordnet sind. Unter "äquidistant" ist hierbei ein Winkelabstand der Rollen untereinander bezogen auf die Symmetrieachse zu verstehen. Mit anderen Worten sind die Rollen äquidistant bezogen auf einen den Rahmen beschreibenden Umfangskreis angeordnet, dessen Mittelpunkt auf der Symmetrieachse des Rahmens liegt. Die beschriebene Anordnung der Rollen bietet den Vorteil, dass der Rahmen besonders gleichmäßig entlang seines Umfangs gelagert ist, sodass anfallende Lagerkräfte, die in das Gehäuse abzutragen sind, möglichst gleichmäßig von allen Rollen gemeinsam abgetragen werden.

Bevorzugt sind die Drehachsen der Rollen jeweils parallel zu der Symmetrieachse des Rahmens orientiert. Bei dieser Anordnung ist die Führung des Rahmens bzw. dessen Drehantrieb um die Symmetrieachse konstruktiv besonders einfach umsetzbar. Hierbei wird zudem erreicht, dass die Ableitung radialer Kräfte bezogen auf die Symmetrieachse des Rahmens vollständig mittels der zylindrischen Laufflächen der Rollen und axiale Kräfte entsprechend vollständig mittels den Nocken der Rollen abgetragen werden können.

In einer besonders vorteilhaften Ausgestaltung weist der Rahmen eine Riemenaufnahme auf, die bevorzugt in Form einer in den Rahmen eingebrachten, sich radial bezogen auf die Symmetrieachse erstreckenden Nut ausgebildet ist. Die Riemenaufnahme ist entsprechend dazu vorgesehen und eingerichtet, einen Antriebsriemen der Siebeinrichtung aufzunehmen, sodass der Rahmen mittels des Antriebsriemens um die Symmetrieachse drehantreibbar ist. Entsprechend ist eine solche Erntemaschine bevorzugt, deren Siebeinrichtung über einen entsprechenden Antriebsriemen verfügt, der in der Riemenaufnahme des Rahmens gelagert ist. Für den Drehantrieb des Rahmens kann der Antriebsriemen ferner mit mindestens einer Treibrolle zusammenwirken, die beispielsweise mittels eines Elektromotors drehantreibbar ist. Auf diese Weise ist es möglich, ein Drehmoment auf den Antriebsriemen zu übertragen, das mittels des Antriebsriemens wiederum über die Riemenaufnahme auf den Rahmen übertragen und dadurch der Rahmen um die Symmetrieachse drehangetrieben werden. Die Ausgestaltung der Riemenaufnahme in dem Rahmen bietet gegenüber dem Stand der Technik den besonderen Vorteil, dass die Einleitung von Kräften zum Antrieb des Rahmens nicht über eine Dichtung erfolgen muss, die entsprechend aufwendig zu gestalten und einem hohen Verschleiß ausgesetzt wäre. Stattdessen kann die Einleitung der Kräfte über den Rahmen direkt erfolgen, für den eine deutlich größere Freiheit zur Wahl eines geeigneten Werkstoffs besteht, sodass der Rahmen besser als eine Dichtung dazu geeignet ist, entsprechende Kräfte von einem Antriebsriemen zu übernehmen. Insbesondere kann der Rahmen von Aluminium gebildet sein.

Weiterhin kann eine solche Ausgestaltung der Erntemaschine besonders vorteilhaft sein, bei der der Rahmen eine Dichtungsaufnahme aufweist, die vorzugsweise in Form einer in den Rahmen eingebrachten, sich radial bezogen auf die Symmetrieachse erstreckenden Nut ausgebildet ist. Als solche ist die Dichtungsaufnahme dazu vorgesehen und eingerichtet, eine Dichtung der Siebeinrichtung aufzunehmen, mittels der der Rahmen gegen das Gehäuse abdichtbar ist. Eine solche Abdichtung kann daraufhin zumindest während eines Betriebs des Kühlventilators vorgenommen werden. Entsprechend ist eine solche Erntemaschine besonders vorteilhaft, deren Siebeinrichtung über eine entsprechende Dichtung verfügt, die in die Dichtungsaufnahme des Rahmens eingesetzt ist und mittels der der Rahmen gegen das Gehäuse abgedichtet ist.

Hierbei ist die Dichtung bevorzugt derart ausgebildet, dass sie den Rahmen zumindest während eines Betriebs des Kühlventilators zumindest im Wesentlichen luftdicht gegen das Gehäuse abgedichtet. Hierbei kann es vorgesehen sein, dass die Dichtung in Form einer flexiblen Dichtlippe ausgebildet ist, die sich in Gegenwart einer Wirkung des Kühlluftstroms elastisch verformt und infolgedessen an das Gehäuse anlegt. Auf diese Weise wird die dichtende Wirkung der Dichtung durch den Betrieb des Kühlventilators hervorgerufen oder zumindest verstärkt. Da die dichtende Wirkung lediglich für einen Zeitraum bedeutsam ist, in dem der Kühlventilator betrieben wird, ist diese "selbstverstärkende Wirkung" der Abdichtung mittels einer solchen Dichtung besonders effizient. In vorteilhafter Ausgestaltung ist die Dichtungsaufnahme radial außenliegend an dem Rahmen ausgebildet.

Gemäß vorstehenden Erläuterungen ist eine solche Ausgestaltung der Erntemaschine besonders von Vorteil, bei der der Rahmen der Siebeinrichtung dazu vorgesehen und eingerichtet ist
i) das Siebelement zu tragen,
ii) eine Dichtung zur zumindest im Wesentlichen luftdichten Abdichtung der Siebeinrichtung gegen das Gehäuse zu tragen und
iii) einen Antriebsriemen zum Drehantrieb des Rahmens um seine Symmetrieachse aufzunehmen.
Entsprechend ist es von Vorteil, wenn der Rahmen sowohl eine Riemenaufnahme gemäß vorstehender Erläuterung als auch eine Dichtungsaufnahme gemäß vorstehender Erläuterung aufweist. Die sich hierdurch jeweils im einzelnen ergebenden Vorteile sind bei dieser Ausgestaltung in Kombination verwirklicht, sodass die Siebeinrichtung insgesamt besonders vorteilhaft wirken kann.

Weiterhin kann eine solche Ausgestaltung besonders vorteilhaft sein, bei der die Nocke der Rollen und die Führungsnut des Rahmens - bezogen auf die Symmetrieachse des Rahmens - unter Ausbildung eines gewissen Spiels in radiale und/oder axiale Richtung zusammenwirken. Hierdurch wird vermieden, dass die Rollen und der Rahmen hochpräzise relativ zueinander ausgerichtet werden müssen oder - falls dies nicht gelänge - der Rahmen in sich verformt werden müsste, um auf den Rollen geführt zu werden. Das Spiel erlaubt hingegen gewisse Toleranzen in der Montage der Rollen und des Rahmens, sodass die Siebeinrichtung mit normalem Aufwand zuverlässig herstellbar ist.

Schließlich kann eine solche Ausgestaltung besonders vorteilhaft sein, bei der der Rahmen mindestens eine innenliegende Hohlkammer, vorzugsweise eine Mehrzahl von innenliegenden Hohlkammer, aufweist. Derartige Hohlkammern bilden in sich abgeschlossene Volumina innerhalb eines Profils des Rahmens. Eine derartige Ausgestaltung des Rahmens hat den Vorteil, dass der Rahmen ohne nennenswerte Einbuße betreffend seine Steifigkeit mit deutlich geringerer Masse hergestellt werden kann, als wenn er keine derartige Hohlkammer aufwiese. Die geringere Masse des Rahmens führt wiederum zu geringeren Lagerkräften an den Rollen, die in das Gehäuse abzutragen sind. Entsprechend ist der Verschleiß der Rollen minimiert, wodurch sich insgesamt ein Wartungsaufwand der Siebeinrichtung verringert.

Die Erfindung ist nachstehend anhand eines Ausführungsbeispiels, das in den Figuren dargestellt ist, näher erläutert. Es zeigt:
- Fig. 1:: Einen schematischen Querschnitt durch eine erfindungsgemäße Erntemaschine,
- Fig. 2:: Eine perspektivische Ansicht eines Kühlsystems der Erntemaschine gemäß Figur 1,
- Fig. 3:: Eine perspektivische Ansicht einer Siebeinrichtung des Kühlsystems gemäß Figur 2,
- Fig. 4:: Ein Querschnitt durch eine Rolle und einen Rahmen der Siebeinrichtung gemäß Figur 3,
- Fig. 5:: Ein Detail des Rahmens gemäß Figur 4 im Bereich einer Rolle.

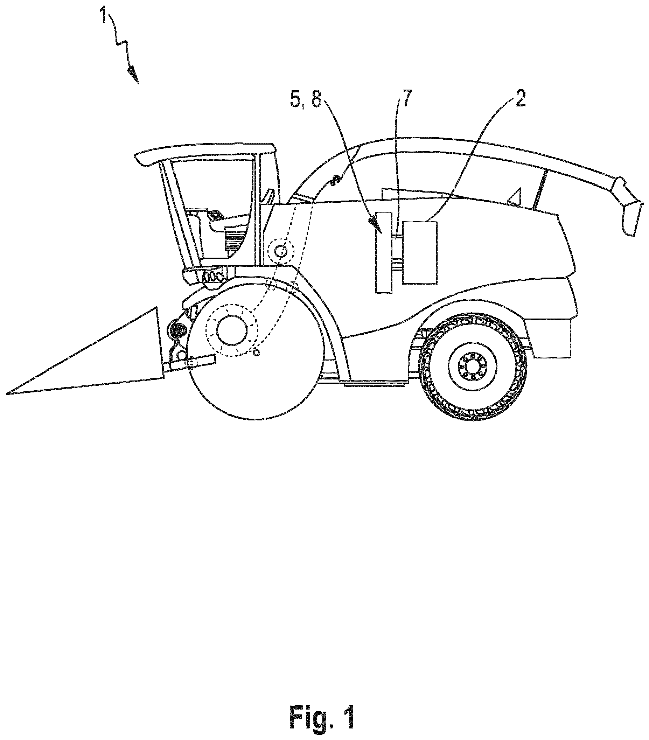

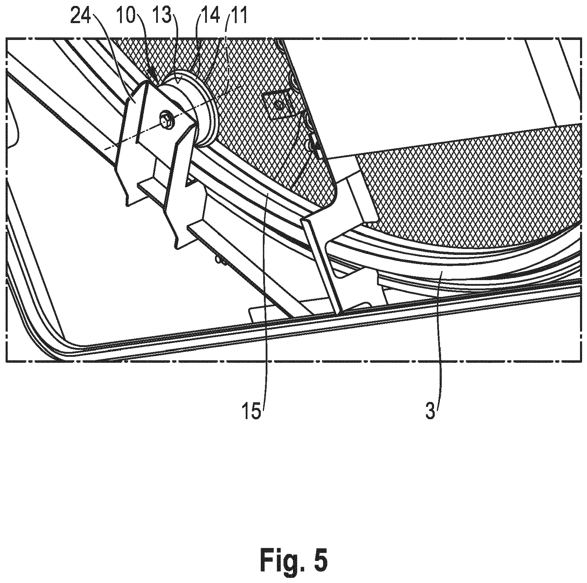

Ein Ausführungsbeispiel, das in den **Figuren 1 bis 5** dargestellt ist, umfasst eine erfindungsgemäße Erntemaschine **1,** die hier in Form eines selbstfahrenden Feldhäckslers ausgebildet ist. Die Erntemaschine **1** umfasst einen Antriebsmotor **2,** der hier von einer Verbrennungskraftmaschine gebildet ist.

Zur Kühlung des Antriebsmotors **2** verfügt die Erntemaschine **1** ferner über ein Kühlsystem **5,** das einen in einem Gehäuse **9** gelagerten Kühlkörper **6,** einen an dem Gehäuse **9** gelagerten Kühlventilator **7** und eine ebenfalls an dem Gehäuse **9** gelagerte Siebeinrichtung **8** umfasst. Der Kühlventilator **7** ist zwischen dem Antriebsmotor **2** und dem Kühlkörper **6** angeordnet und ist dazu vorgesehen und eingerichtet, einen Kühlluftstrom zu erzeugen, der jenseits des Kühlkörpers **6** angesaugt wird und im Zuge des Betriebs des Kühlventilators **7** den Kühlkörper **6** durchströmt und auf diese Weise an dem Kühlkörper **6** anstehende Wärme abführt.

Um sowohl den Antriebsmotor **2** als auch den Kühlkörper **6** vor der Verschmutzung mit Schmutzpartikeln zu schützen, die im Zuge eines Ernteprozesses unweigerlich in der Luft angereichert sind, ist das Kühlsystem **5** mit der Siebeinrichtung **8** ausgestattet, die ein Siebelement **4** umfasst. Letzteres ist hier von einem engmaschigen Siebgitter gebildet, das auf einen Rahmen **3** der Siebeinrichtung **8** gespannt und mit dem Rahmen **3** verklebt ist. Das Siebelement **4** definiert eine Siebfläche **13,** die von dem Kühlluftstrom im Zuge eines Betriebs der Erntemaschine **1** durchströmt wird. Aufgrund der engmaschigen Ausbildung des Siebelements **4** werden die in dem Kühlluftstrom mitgeführten Schmutzpartikel an der Siebfläche **13** abgeschieden und auf diese Weise von einem Weitertransport zu dem Kühlkörper **6** und/oder dem Antriebsmotor **2** abgehalten.

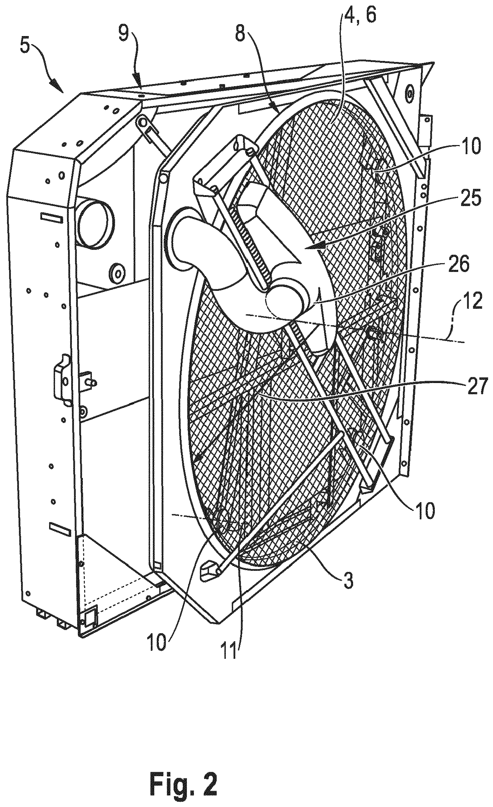

Um die Siebfläche **13** fortwährend abzureinigen, d.h. die Schmutzpartikel von der Siebfläche **13** abzunehmen, verfügt das Kühlsystem **5** in dem gezeigten Beispiel ferner über eine Reinigungsvorrichtung **25.** Diese umfasst einen Reinigungskopf **26,** der unmittelbar der Siebeinrichtung **8** bzw. der Siebfläche **13** zugeordnet ist. Diese Zuordnung äußert sich darin, dass eine in den Figuren nicht dargestellte Wirkungsfläche des Reinigungskopfs **26** in unmittelbarer Nähe zu der Siebfläche **13** angeordnet ist. Mittels eines in den Figuren nicht dargestellten Gebläses wirkt an der Wirkungsfläche des Reinigungskopfs **26** ein Unterdruck, mittels dessen an der Siebfläche **13** anhaftende Schmutzpartikel abgesaugt werden können. Wie sich insbesondere anhand von **Figur 2** ergibt, ist der Reinigungskopf **26** in dem gezeigten Beispiel langgestreckt ausgebildet.

Die Siebeinrichtung **8** ist derart ausgebildet, dass der Rahmen **3** mitsamt dem daran gelagerten Siebelement **4,** das die Siebfläche **13** bildet, um eine Symmetrieachse **12** des Rahmens **3** drehantreibbar ist, wobei die Siebfläche **13** orthogonal zu der Symmetrieachse **22** orientiert ist. Der Rahmen **3** als solcher ist bezogen auf die Symmetrieachse **12** rotationssymmetrisch ausgebildet, sodass der Rahmen **3** einen orthogonal zu der Symmetrieachse **12** orientierten Kreisring um die Symmetrieachse **12** beschreibt. Der Rahmen **3** ist hier von einem strangepressten Aluminiumprofil gebildet. Entsprechend ist auch an dem Rahmen **3** befestigte Siebelement **4** kreisförmig ausgebildet, sodass die Siebfläche **13** in Form einer Kreisfläche vorliegt. Der langgestreckte Reinigungskopf **26** weist eine sich radial bezogen auf die Symmetrieachse **12** erstreckende Länge auf, die zumindest im Wesentlichen einem Radius **27** des Rahmens **3** um die Symmetrieachse **12** entspricht. Auf diese Weise ist der Reinigungskopf **26** dazu geeignet, in der in dem gezeigten Beispiel gezeigten Form die Siebfläche **13** in einem Bereich von der Symmetrieachse **12** bis zu einem radial äußeren Rand des Siebelements **4** zu überdecken. Auf diese Weise ist der Reinigungskopf **26** dazu geeignet, im Zuge eines Drehantriebs des Rahmens **3** mitsamt dem daran gelagerten Siebelement **4** um die Symmetrieachse **12** zyklisch mit der gesamten Siebfläche **13** zusammenzuwirken, die fortwährend relativ zu dem Reinigungskopf **26** bewegt wird, sodass sukzessive sämtliche Stellen der Siebfläche **13** den Reinigungskopf **26** passieren und dabei abgereinigt werden.

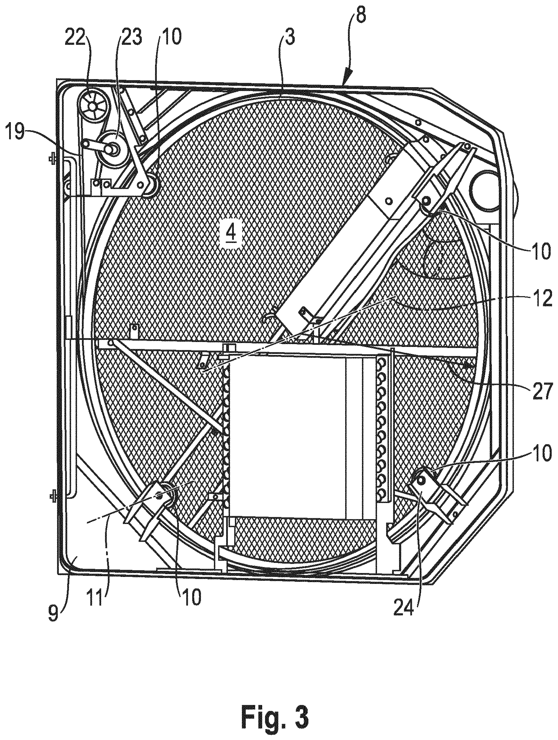

Zur Lagerung des Rahmens **3** an dem Gehäuse **9** verfügt die Siebeinrichtung **8** in dem gezeigten Beispiel über insgesamt vier Rollen **10,** die jeweils um eine eigene Drehachse **11** drehbar gelagert sind. Die Drehachsen **11** der Rollen **10** sind jeweils parallel zueinander sowie parallel zu der Symmetrieachse **12** des Rahmens **3** orientiert. Dies ist besonders gut anhand der **Figuren 2** **und** **3** ersichtlich. Die Rollen **10** sind dazu vorgesehen und eingerichtet, den Rahmen **3** drehbar an dem Gehäuse **9** zu lagern, wobei der Rahmen **3** an Laufflächen **13** der Rollen **10** abrollt, während die Rollen **10** als solche stationär jeweils mittels einer Rollenhalterung **24** an dem Gehäuse **9** gelagert sind und sich zur Führung des Rahmens **3** um ihre jeweilige Drehachse **11** drehen können. Hierbei sind die Rollen **10** in dem gezeigten Beispiel nicht für einen Drehantrieb des Rahmens **3** verantwortlich. Dieser erfolgt mittels eines Antriebsriemens **19,** der nachstehend gesondert erläutert ist. Die Rollen **10** sind hier jeweils von glasfaserverstärktem Kunststoff gebildet.

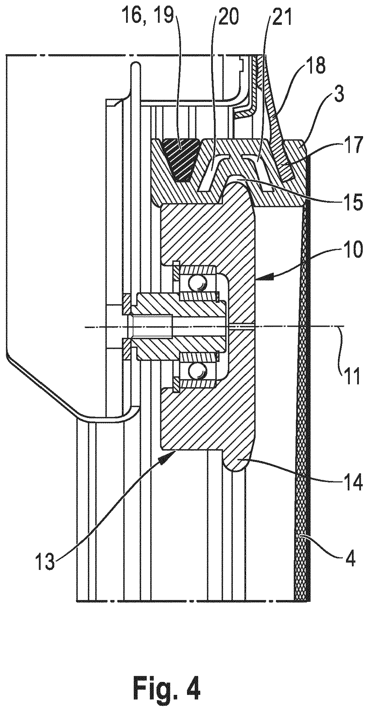

Die Rollen **10** sind jeweils mit einer zylindrischen Lauffläche **13** sowie einer bezogen auf die jeweilige Drehachse **11** rotationssymmetrisch ausgebildeten Nocke **14** ausgebildet, wobei die jeweiligen Nocke **14** radial über die zylindrischen Lauffläche **13** der jeweiligen Rolle **10** hinaus nach außen vorsteht. Dies ergibt sich besonders gut anhand von **Figur 4****.** Zur Lagerung und Führung des Rahmens **3** an den Rollen **10** verfügt der Rahmen **3** über eine Führungsnut **15,** die an einer radial innenliegenden Mantelfläche des Rahmens **3** ausgebildet ist und komplementär zu den Nocken **14** der Rollen **10** dimensioniert ist. Mittels der Führungsnut **15** ist der Rahmen **3** dazu geeignet, unter Ausbildung eines Formschlusses mit den Nocken **14** mit den Rollen **10** zusammenzuwirken. Dieser Formschluss äußert sich darin, dass der Rahmen **3** in eine axiale Richtung bezogen auf die Symmetrieachse **12** an den Rollen **10** gelagert ist. Entsprechend ist eine Bewegung des Rahmens **3** in eine zu der Symmetrieachse **12** parallele Richtung relativ zu den Rollen **10** unterbunden.

Zusätzlich zu der axialen Lagerung des Rahmens **3** ist dieser mittels der zylindrischen Laufflächen **13** auch in radiale Richtung bezogen auf die Symmetrieachse **12** an den Rollen **10** gelagert. Hierzu wirkt der Rahmen **3** mit einer entsprechenden Kontaktfläche, die von der radial innenliegenden Mantelfläche des Rahmens **3** gebildet ist, mit den zylindrischen Laufflächen **13** der Rollen **10** zusammen. Auf diese Weise können Kräfte von dem Rahmen **3,** die in senkrechte Richtung zu der Symmetrieachse **12** wirken, auf die Rollen **10** übertragen und mittels der Rollen **10** schließlich in das Gehäuse **9** der Siebeinrichtung **8** abgeleitet werden.

Um die Übertragung von Kräften (axial und radial) von dem Rahmen **3** auf das Gehäuse **9** möglichst gleichmäßig zu verteilen, sind die Rollen **10** bezogen auf die Symmetrieachse **12** in gleichen Winkelabständen äquidistant verteilt angeordnet. In dem gezeigten Beispiel verfügt die Siebeinrichtung über insgesamt vier Rollen **10,** die entsprechend jeweils in einem Winkelabstand von 90° voneinander verteilt angeordnet sind. Dies ergibt sich besonders gut anhand von **Figur 3****.**

Der Rahmen **3** weist in dem gezeigten Beispiel eine Riemenaufnahme **16** auf, die in Form einer in den Rahmen **3** eingelassenen Nut ausgebildet ist. Die Riemenaufnahme **16** ist dazu vorgesehen und eingerichtet, einen Antriebsriemen**19** aufzunehmen. Dies ist in dem gezeigten Beispiel auch so umgesetzt, wobei der Antriebsriemen **19** dazu dient, ein bereitgestelltes Drehmoment auf den Rahmen **3** zu übertragen und letzteren auf diese Weise um die Symmetrieachse **12** drehanzutreiben. Zu diesem Zweck wirkt der Antriebsriemen **19** hier mit einer Antriebseinrichtung zusammen, die eine Antriebsrolle **22** und eine Spannrolle **23** umfasst. Die Antriebsrolle **22** ist mittels eines in den Figuren nicht dargestellten Antriebsmotors, der beispielsweise von einem Elektromotor gebildet ist, verbunden. Der Antriebsriemen **19** ist derart in der Riemenaufnahme **16** gelagert, dass auf den Antriebsriemen **19** einwirkende Kräfte über Reibung an Flanken der Riemenaufnahme **16** in den Rahmen **3** übertragen werden. Hierbei findet der Kraftfluss unmittelbar von dem Antriebsriemen **16** auf den Rahmen **3** statt, das heißt insbesondere nicht durch eine Dichtung oder dergleichen.

Schließlich umfasst der Rahmen **3** ferner eine Dichtungsaufnahme **17,** die ebenfalls in Form einer in dem Rahmen **3** ausgeformten Nut ausgebildet ist. Die Dichtungsaufnahme **17** ist dazu vorgesehen und eingerichtet, mit einer Dichtung **18** zusammenzuwirken. Dies ist in dem gezeigten Beispiel auch entsprechend umgesetzt, wobei die Dichtung **18** von einer von Kunststoff gebildeten, flexiblen bzw. weichen Dichtungslippe gebildet ist. Die Dichtung **18** ist in der Dichtungsaufnahme **17** gelagert, beispielsweise verklebt. Die Dichtungsaufnahme **17** ist radial außenliegend an dem Rahmen **3** ausgebildet, sodass sich die Dichtung **18** ausgehend von dem Rahmen **3** radial nach außen erstreckt und entsprechend über den Rahmen **3** hinaus vorsteht. Bei dieser Anordnung wechselwirkt die Dichtung **18** mit dem Kühlluftstrom, der mittels des Kühlventilators **7** erzeugt wird. Der Kühlluftstrom führt dazu, dass sich die Dichtung **18** elastisch verformt und daraufhin mit ihrem radial äußeren, dem Rahmen **3** abgewandten Endabschnitt dichtend an das Gehäuse **9** anlegt. Auf diese Weise wird die dichtende Wirkung der Dichtung **18** vor allem dann aktiviert, wenn sie benötigt wird, nämlich in Gegenwart des Kühlluftstroms.

In besonders bevorzugter Ausgestaltung ist der Rahmen **3** in dem gezeigten Beispiel mit Hohlkammern **20, 21** versehen, die sich insbesondere anhand von **Figur 4** ergeben. Die Hohlkammern **20, 21** sind derart in den Querschnitt des Rahmens **3** eingebracht, dass sie in sich abgeschlossene Kammern bilden, die von außen her nicht zugänglich sind. Sie dienen dazu, die Masse des Rahmens **3** zu reduzieren, wobei die Hohlkammern **20, 21** derart ausgebildet sind, dass eine Steifigkeit des Rahmens **3** gegenüber einer Ausgestaltung des Rahmens **3** mit einem Vollquerschnitt kaum verringert ist.

### Bezugszeichenliste

- 1: Erntemaschine
- 2: Antriebsmotor
- 3: Rahmen
- 4: Siebelement
- 5: Kühlsystem
- 6: Kühlkörper
- 7: Kühlventilator
- 8: Siebeinrichtung
- 9: Gehäuse
- 10: Rolle
- 11: Drehachse
- 12: Symmetrieachse
- 13: Lauffläche
- 14: Nocke
- 15: Führungsnut
- 16: Riemenaufnahme
- 17: Dichtungsaufnahme
- 18: Dichtung
- 19: Antriebsriemen
- 20: Hohlkammer
- 21: Hohlkammer
- 22: Antriebsrolle
- 23: Spannrolle
- 24: Rollenhalterung
- 25: Reinigungsvorrichtung
- 26: Reinigungskopf
- 27: Radius

## Patentansprüche

1. Selbstfahrende Erntemaschine (1), insbesondere in Form eines Feldhäckslers, umfassend
- einen Antriebsmotor (2),
- ein Kühlsystem (5) zur Kühlung des Antriebsmotors (2),
das Kühlsystem (5) umfassend
- ein Gehäuse (9),
- einen in dem Gehäuse (9) angeordneten Kühlkörper (6),
- ein Kühlventilator (7) zur Erzeugung eines Kühlluftstroms entlang des Kühlkörpers (6),
- eine dem Kühlkörper (6) in Strömungsrichtung des Kühlluftstroms betrachtet vorgeordnete, an dem Gehäuse (9) gelagerte Siebeinrichtung (8),
wobei die Siebeinrichtung (8) einen rotationssymmetrischen Rahmen (3) sowie ein an dem Rahmen (3) gespanntes, flächiges Siebelement (4) aufweist, das bei Betrieb des Kühlventilators (7) von dem Kühlluftstrom durchströmt wird, sodass das Siebelement (4) dazu eingerichtet ist, in dem Kühlluftstrom mitgeführte Schmutzpartikel zurückzuhalten,
wobei die Siebeinrichtung (8) eine Mehrzahl von um eine Drehachse (11) drehbare Rollen (10) umfasst, mittels derer der Rahmen (3) derart an dem Gehäuse (9) gelagert ist, dass der Rahmen (3) relativ zu dem Gehäuse (9) um eine Symmetrieachse (12) des Rahmens (3) drehbar ist,
**dadurch gekennzeichnet, dass**
die Rollen (10) jeweils eine zylindrische Lauffläche (13) sowie eine bezogen auf die Drehachse (11) der jeweiligen Rolle (10) rotationssymmetrische Nocke (14) aufweist, die radial bezogen auf die Drehachse (11) der jeweiligen Rolle (10) über die zylindrische Lauffläche (13) nach außen vorsteht,
wobei der Rahmen (3) eine zu den Nocken (14) komplementäre Führungsnut (15) aufweist, sodass der Rahmen (3) unter Ausbildung eines mittels Nocken (14) und Führungsnut (15) gebildeten Formschlusses an den Rollen (10) gelagert ist.

2. Erntemaschine (1) nach Anspruch 1, **dadurch gekennzeichnet, dass** sämtliche Rollen (10) der Siebeinrichtung (8) gleichartig ausgebildet sind.

3. Erntemaschine (1) nach einem der vorhergehenden Ansprüche, **dadurch gekennzeichnet, dass** die Rollen (8) bezogen auf die Symmetrieachse (12) des Rahmens (3) äquidistant um die Symmetrieachse (13) herum verteilt angeordnet sind.

4. Erntemaschine (1) nach einem der vorhergehenden Ansprüche, **dadurch gekennzeichnet, dass** die Drehachsen (11) der Rollen (10) und die Symmetrieachse (12) des Rahmens (3) parallel zueinander orientiert sind.

5. Erntemaschine (1) nach einem der vorhergehenden Ansprüche, **dadurch gekennzeichnet, dass** der Rahmen (3) eine Riemenaufnahme (16) aufweist, vorzugsweise in Form einer in den Rahmen (3) eingebrachten, sich radial bezogen auf die Symmetrieachse (12) erstreckenden Nut, in der ein Antriebsriemen (19) der Siebeinrichtung (8) aufgenommen ist, sodass der Rahmen (3) mittels des Antriebsriemens um die Symmetrieachse (12) drehantreibbar ist.

6. Erntemaschine (1) nach einem der vorhergehenden Ansprüche, **dadurch gekennzeichnet, dass** der Rahmen (3) eine Dichtungsaufnahme (17) aufweist, vorzugsweise in Form einer in den Rahmen (3) eingebrachten, sich radial bezogen auf die Symmetrieachse (12) erstreckenden Nut, in der eine Dichtung (18) der Siebeinrichtung (8) aufgenommen ist, mittels der der Rahmen (3) gegen das Gehäuse (9) zumindest während eines Betriebs des Kühlventilators (7) im Wesentlichen luftdicht abdichtbar ist.

7. Erntemaschine (1) nach Anspruch 5 oder 6, **dadurch gekennzeichnet, dass** die Dichtungsaufnahme (17) radial außenliegend an dem Rahmen (3) ausgebildet ist.

8. Erntemaschine (1) nach einem der vorhergehenden Ansprüche, **dadurch gekennzeichnet, dass** der Rahmen (3) dazu vorgesehen und eingerichtet ist,
i) das Siebelement (4) zu tragen,
ii) eine Dichtung (18) zur zumindest im Wesentlichen luftdichten Abdichtung der Siebeinrichtung (8) gegen das Gehäuse (9) zu tragen und
iii) einen Antriebsriemen (19) zum Drehantrieb des Rahmens (3) um seine Symmetrieachse (12) aufzunehmen.

9. Erntemaschine (1) nach einem der vorhergehenden Ansprüche, **dadurch gekennzeichnet, dass** das Siebelement (4) mit dem Rahmen (3) fest verbunden, vorzugsweise verklebt, ist.

10. Erntemaschine (1) nach einem der vorhergehenden Ansprüche, **dadurch gekennzeichnet, dass** die Nocke (14) und die Führungsnut (15) unter Ausbildung eines Spiels in - bezogen auf die Symmetrieachse (12) - radiale und/oder axiale Richtung zusammenwirken.

11. Erntemaschine (1) nach einem der vorhergehenden Ansprüche, **dadurch gekennzeichnet, dass** der Rahmen (3) mindestens eine innenliegende Hohlkammer (20, 21), vorzugsweise eine Mehrzahl von innenliegenden Hohlkammern (20, 21), aufweist.

12. Erntemaschine (1) nach einem der vorhergehenden Ansprüche, **dadurch gekennzeichnet, dass** die Rollen (10) von glasfaserverstärktem Kunststoff gebildet ist.

13. Erntemaschine (1) nach einem der vorhergehenden Ansprüche, **dadurch gekennzeichnet, dass** der Rahmen (3) von Aluminium gebildet ist.
